# EUROPÄISCHE PATENTSCHRIFT

(11) **EP 0 586 945 B1**
(45) Veröffentlichungstag und Bekanntmachung des Hinweises auf die Patenterteilung: **17.06.1998**
(21) Anmeldenummer: 93113256.7
(22) Anmeldetag: 19.08.1993
(51) Int. Cl.: A01C 7/00, A01B 49/06

(54) **Direktsaatverfahren zum Einbringen von Saatgut in den Boden**
Direct seed drill
Semoir direct

(30) Priorität: 04.09.1992 DE 4229211; 05.10.1992 DE 4233443; 21.10.1992 DE 4235524
(43) Veröffentlichungstag der Anmeldung: 16.03.1994
(73) Patentinhaber: Amazonen-Werke H. Dreyer GmbH & Co. KG, D-49205 Hasbergen (DE)
(72) Erfinder: Dreyer, Heinz, Dr. Dipl.-Ing., D-49502 Hasbergen (DE); Wiemeyer, Benno, D-49504 Lotte (DE); Scheufler, Bernd, Dr., D-49502 Hasbergen (DE); von Bülow, Hans, D-4500 Osnabrück (DE); Dreyer, Justus, D-49502 Hasbergen (DE)

(56) Entgegenhaltungen:
- EP-A- 0 049 330
- DE-A- 3 627 801
- DE-A- 3 743 032
- DE-A- 4 025 989
- DE-C- 67 768
- FR-A- 2 684 514

## Beschreibung

Die Erfindung betrifft ein Direktsaatverfahren zum Einbringen von Saatgut in den Boden und eine Direktsaatmaschine für das Direktsaatverfahren.

Derartige Sämaschinen, die für die Einbringung des Saatgutes im Zerotillage- und/oder Minimumtillageverfahren, welches man auch Direktsaat oder Saat bei reduzierter Bodenbearbeitung nennt, geeignet sind, sind beispielweise in der DE-A- 36 27 801 beschrieben. Das Ziel solcher Direktsaatmaschinen besteht darin, Saatgut in nach der Ernte nicht bearbeitete Böden, wobei das Stroh des Getreide bzw. die Grünmasse des Mais und die Stoppeln sich oben auf dem Boden befinden, einbringen. Das Stroh oder die Grünmasse kann auch gehäckselt sein. Der Saatvorgang kann auch auf flach bearbeitete Böden (mechanische Unkrautbekämpfung), wobei dann das Stroh und die Stoppeln bzw. die Grünmasse (Mais) sich in oberflächennahen Bodenschicht (mit Bodenteilen vermischt) befindet, durchgeführt werden. Je nach Fruchtart und Ertrag handelt es sich dabei z.B. bei Getreide um ca. 4 bis über 10 t Strohmasse pro ha.

Grundsätzlich versucht man seit einiger Zeit, auf zwei verschiedenen Wegen hier zum Optimum zu gelangen. Einerseits werden Maschine mit Scheibenscharen (1, 2 oder 3 Scheiben pro Schareinheit) oder Maschinen mit Meißel- oder Kultivatorscharen eingesetzt (vgl. hierzu auch den Artikel Direktsaat in Landtechnik 9/92, 47. Jahrgang, Seiten 446 bis 449).

Aus diesem Artikel in der vor genannten Zeitschrift geht hervor, daß durch die Einbringung des Saatgutes mit Meißelscharen die beste Keimung erzeugt wird, da im Gegensatz zu Scheibenscharen dabei kein Stroh von oben die Säfurche und vor allem nicht unter die Saatkörner gedrückt wird. Auch bei harten Böden und Steinen haben die Meißelscharmaschinen Vorteile. Bei den oben erwähnten Stroh- bzw. Grünmassen wird aber von den Meißelscharen vor jedem Meißel oft eine Mischung von Stroh- bzw. Grünmasse und Boden aufgeschoben, die eine beträchtliche Haufengröße von beispielsweise 40 bis 60 cm "Durchmesser" und mehr erreichen können, ehe sie sich von dem Säschar lösen und auf der einen Seite am Säschar vorbei nach hinten gelangen. Damit eine solche Maschine nun nicht verstopft, weisen die Direktsämaschine, die bei dem erfindungsgemäßen Direktsaatverfahren eingesetzt werden, in erfindungsgemäßer Weise einen Scharabstand von mindestens 50 cm auf. Weiterhin ist bei diesen Maschinen für die Durchführung des Direktsaatverfahrens, um einen ausreichend engen Reihenabstand noch zu erreichen zu können, vorgesehen, daß die Säschare in mindestens drei, vorzugsweise vier hintereineinander liegenden Querreihen in Lücke zueinander angeordnet sind.

Durch diese Maßnahmen hat man dann zwar eine verstopfungsfreie Maschine erreicht, aber die dabei von der Maschine mitgeschobenen und durch die Maschine hindurch geschobenen und hindurch gelangenden Stroh- und Erdgemische kann auch eine sehr breite Säfurche entstehen, so daß die bekannten Tiefenführungsrollen, die relativ schmal ausgebildet sind, keine ausreichend gleichmäßige Sätiefe gehalten wird. Hierzu wird dann in einer besonderen Weiterbildung der Erfindung vorgeschlagen, daß die Führungsrollen eine derartige Breite aufweisen, daß sie neben der Säfurche auf der Bodenoberfläche abrollen und das Säschar sicher in der Tiefe führen.

Wenn man die bisherigen Probleme durch die vor geschilderten Maßnahmen gelöst hat, tritt jedoch das weiter ungelöste Problem auf, daß die vor erwähnten Mischhaufen, Mischung aus Stroh und Erde bzw. Grünmasse zwar nicht in der Maschine mehr verbleiben und die Maschine verstopfen, sondern sie fließen durch die Maschine in Haufen und Häufchen hindurch und liegen dann nach dem Durchgang durch die Maschine in Haufen auf dem Feld. Sie verhindern ein optimales Keimen und Aufwachsen der Saat.

Abhilfe wird durch die kennzeichnenden Maßnahmen des des Anspruches 1 geschaffen. Mittels der vorgenannten Verfahrensschritte wird auch auf mit großen Mengen Pflanzen und Pflanzenrückständen (Stroh) bedeckten, die teilweise zu Haufen zusammengehäuft sind, ein gutes Ergebnis des Saatgutes in den Boden sowie optimale Keim- und Wachstumsbedingungen geschaffen. Durch diesen Nachbearbeitungsrotor werden die vor erwähnten Haufen in überraschender und in nicht vorhersehbarer Weise separiert, d.h., die Stroh- bzw. Grünmasse wird von den Bodenteilen getrennt, und beides wird in vergleichmäßigter Weise und in egalisierter Form, d.h., daß die Stroh- bzw. die Grünmasse dabei getrennt von den Bodenteilen oben auf der Bodenoberfläche abgelegt wird. Weiterhin sieht das erfindungsgemäße Direktsaatverfahren vor, daß der Rotor derart einstellbar ist, daß der Rotor Bodenteile in die Säfurche fördert, so daß die Säfurche geschlossen und/oder die in der Säfurche abgelegten Saatkörner mit Bodenteilen bedeckt werden. Somit wird gewährleistet, daß auch unter schwierigsten Bedingungen auf schweren Böden sichergestellt wird, daß die Saatkörner mit Bodenteilen bedeckt werden. Der Rotor schiebt Stroh- bzw. Grünmasse vermischt mit Bodenteilen vor sich her, wobei durch den Rotor in überraschend einfacher Weise eine Separierung dieses Gemisches erfolgt, so daß im wesentlichen nur die Bodenteile in die Säfurche gefördert werden, während die Stroh- und Grünmasse Anteile dieses Mischhaufens von dem Rotor erfaßt und in vergleichmäßigter Weise oberhalb des abgelegten Saatgutes abgelegt wird.

Zur Durchführung dieses erfindungsgemäßen Direktsaatverfahrens ist eine Direktsämaschine gemäß des Anspruches 3 vorgesehen. Infolge dieser Maßnahmen kann auch auf mit großen Mengen Pflanzen und Pflanzenrückständen bedeckten Bodenoberflächen, selbst wenn diese in Haufen vorliegen, das Saatgut eingebracht werden. Hierbei werden durch den Nachbearbeitungsrotor die Pflanzen und Pflanzenreste in vergleichmäßigter Weise oben auf der Bodenoberfläche abgelegt.

In bevorzugter Weise sind die Säschare als Meißelschare ausgebildet. Die Meißelschare werden, insbesondere in schwierigen Fällen Scheibenscharen vorgezogen, weil sie bessere Voraussetzungen für das Keimen und Auflaufen des Saatgutes schaffen. Weiterhin haben Direktsämaschine, die mit Meißelscharen ausgestattet sind, Vorteile (bessere Voraussetzungen zur Keimung des Saatgutes, leichteres Eindringen in härtere Böden, Arbeiten in sehr steinigen Böden). Um diese Vorteile optimal nutzen zu können, wird in erfindungsgemäßer Weise vorgeschlagen eine mit Meißelsäscharen ausgestattete Direktsämaschine mit einem angetriebenen Nachbearbeitungsrotor auszurüsten. Dieser Nachbearbeitungsrotor ist hinter der mit Meißelsäscharen ausgerüsteten Direktsämaschine angeordnet und separiert und vergleichmäßigt die vor beschriebenen Haufen aus Stroh bzw. Grünmasse mit Bodenteilen. Der Rotor trennt also das Stroh bzw. die Grünmasse von den Bodenteilen und legt die Stroh und Grünmasse sowie die Bodenteile in vergleichmäßigter und separierter Weise ab. Hierbei werden die Bodenteile direkt auf dem Boden und darüber das Stroh bzw. die Grünmasse allein abgelegt. Außerdem wird mit dem Nachbearbeitungsrotor gewährleistet, weil er Bodenteile in einem kleinen Wall vor sich her schiebt, daß diese Bodenteile in die evtl. noch nicht geschlossene Säfurche gefördert wird, so daß die in der Säfurche abgelegten Samenkörner mit Bodenteilen bedeckt werden.

Damit die in erfindungsgemäßer Weise verwendeten Meißelsäschare in gleichmäßiger Tiefe durch den Boden geführt werden, wobei die Eindringtiefe der Meißelsäschare in den Boden durch eine entsprechende Höhenlage der hinter den Meißelsäscharen angeordneten Tiefenführungsrolle in unterschiedlicher Weise je nach Fruchtart einstellbar sind, weisen die hinter den Scharen angeordneten Rollen eine derartige Breite auf, daß sie sich bei der Arbeit auf dem Boden neben der Säfurche abstützen, so daß die Schare von diesen Rollen in gleichmäßiger Tiefenführung getragen und geführt werden.

In einer Weiterbildung der Direktsämaschine ist in erfindungsgemäßer Weise vorgesehen, daß die Direktsämaschine auch mit Säscharen ausgestattet werden kann, die als Kultivator- oder Hackschare ausgebildet sind, welche unterhalb des Saatgutauslaufes und dicht unterhalb ihres unteren Endes zumindest einen Prallkörper zur Breitverteilung des Saatgutes aufweisen. Diese sog. Kultivator- und Hackschare besitzen seitlich abstehende Flügel, die den Boden in Sätiefe abschneiden bzw. die Wurzeln der Pflanzen durchschneiden. Hierdurch wird beim Sävorgang das im Boden wachsende Unkraut (auch Ausfallgetreide) abgeschnitten. Hierdurch erfolgt beim Sävorgang gleichzeitig auch eine mechanische Unkrautbekämpfung; und zwar sowohl bei dem Zerotillageverfahrren als auch dem Minimumtillageverfahren. Durch den hinter den Scharen der Direktsämaschine angeordneten Nachbearbeitungsrotor werden die abgeschnittenen Pflanzen aus dem Boden herausgerissen und auf der Bodenoberfläche abgelegt. Dadurch, daß die Kultivatorschare bzw. die Kultivatoreinsätze unten dicht über der Ablagefläche des Saatgutes in dem Boden eine Prallkörper aufweisen, wird das Saatgut anstelle in schmalen Reihen in sog. Bandreihen, in Breiten von ca. 4 - 10 cm und mehr abgelegt. Hierdurch ergeben sich wesentlich bessere Standraumverhältnisse für die Pflanzen, wodurch dann wiederum die Schare selbst in einem größeren Scharabstand zueinander angeordnet werden können, so daß ohne weiteres Reihenabstände von z.B. 16 - 20 cm realisiert werden können, was wiederum die Durchlässigkeit der Direktsämaschine verbessert und die Maschinengewichte und Maschinenpreise verringert werden können. Es ist hier also eine Wechselwirkung gegeben.

In einer weiteren Ausbildung schlägt die Erfindung bei der Direktsämaschine vor, daß wahlweise verschiedene Schare angeordnet werden können. Hierzu ist in einer bevorzugten Weise vorgesehen, daß die Säschare Halterungen und Scharkörper aufweisen, daß an den Halterungen die Scharkörper lös- und austauschbar befestigt sind, so daß wahlweise als Meißelschare, Band-, Meißelbandschare oder Kultivatorschare ausgebildete Scharkörper an den Halterungen befestigbar sind. Hierdurch erhält die Direktsämaschine eine enorme Universallität, je nach Boden, Bodenfestigkeit, Steinbesatz, Pflanzenbesatz, Saatgut bzw. Sätiefe.

Desweiteren ist vorgesehen, damit der Nachbearbeitungsrotor, der also viel Stroh- und Pflanzenteile verarbeiten muß, nicht so leicht "wickelt" und seine ihm gestellten Aufgaben erfüllen kann, daß der Nachbearbeitungsrotor einen Durchmesser von mindestens 20 cm aufweist, daß auf der Mantelfläche des Rotors Zinken oder Ansätze angeordnet sind, die sich nach außen verjüngen.

Der Nachbearbeitungsrotor besitzt also, wie vorstehend erläutert ist, zwei Wirkungsweisen: nämlich einerseits die Trennung bzw. Separierung von Stroh und Grünmasse von Erdmassen oder Bodenteilen, welche sich in den aus Stroh und/oder Grünmasse und Bodenteilen befindlichen Mischhaufen sich befindet und eine Vergleichmäßigung bzw. Egalisierung dieser beiden vollkommen verschiedenen Teilmassen (Stroh und Grünmasse einerseits und Bodenteile andererseits auf der Bodenoberfläche, wobei das Stroh und die Grünmase oben auf den Bodenteilen abgelegt wird. Wenn die Direktsämaschine insbesondere mit Kultivatorscharen oder Hackscharen ausgebildet ist oder vor den Säscharen Kultivator- und Hackschare angeordnet sind, wobei also gleichzeitig mit dem Sävorgang oder getrennt von dem Sävorgang eine mechanische Unkrautbekämpfung vorgenommen worden ist, wird erfindungsgemäß in einer Weiterbildung der Erfindung vorgeschlagen, daß der Bearbeitungsrotor auf einer derartigen Arbeitstiefe einstellbar ist, daß die Ansatz- oder Zinkenspitzen auch geringfügig, d.h., 1 - 3 cm tief in den Boden eingreifen und die von den Kultivator- oder Hackscharen abgeschnittenen Pflanzen aus dem Boden herausreißen und nach hinten werfen, wobei eine weitgehende Separierung von Pflanzen- und Bodenteilen erfolgt. Somit werden also die abgeschnittenen Unkrautpflanzen bzw. Pflanzen des Auflaufgetreides (z.T. auch noch mit ihren Wurzeln) besser vom Boden getrennt oben auf der Bodenoberfläche durch den Nachbearbeitungsrotor abgelegt und können dort verwelken; wodurch sie als Konkurenz für die eingesäten Nutzpflanzen wirksam ausgeschaltet sind.

Der Nachbearbeitungsrotor kann sowohl an Direktsämaschinen, deren Säschare einzeln höhenbewegbar gegenüber dem Rahmen der Direktsämaschine aufgehängt sind oder bei Sämaschinen, die mit Federkultivatorscharen ausgerüstet und in Gruppen gemeinsam höhenbeweglich am Rahmen angeordnet sind, eingesetzt werden. Falls diese Federkultivatorschare, die in Gruppen zusammen höhenbewegbar sind, wiederum Haufen von Pflanzen und Bodenteilen erzeugen, werden sie von dem erfindungsgemäßen Nachbearbeitungsrotor in vorbeschriebener Weise separiert und vergleichmäßigt auf dem Boden abgelegt.

Um eine gleichmäßige Tiefenführung der Schare auch unter schwierigen Bodenverhältnissen zu gewährleisten, ist vorgesehen, daß den Säscharen Tiefenführungsrollen zugeordnet sind, die an ihrem äußeren Umfang in Abständen zueinander angeordnete Druckstäbe aufweisen, wobei sich zwischen den Druckstäben ein Freiraum befindet, daß die Druckrolle in Draufsicht gesehen unter einem Winkel schräg zur Fahrtrichtung gestellt unter dem Säschar angeordnet ist.

Infolge dieser Maßnahme, d.h., daß die Druckrolle in Draufsicht gesehen unter einem Winkel schräg zur Fahrtrichtung angestellt hinter dem Säschar angeordnet ist, ergibt sich in überraschender Weise bei einer Druckrolle, die an ihrem äußeren Umfang in Abständen zueinander angeordnete Druckelemente aufweist, wobei sich zwischen den Druckelementen jeweils ein Freiraum befindet, daß bei einer gleichmäßigen Tiefenführung auch unter schwierigsten Verhältnissen immer gewährleistet ist, daß die Samenkörner, die im Säschlitz abgelegt worden sind, mit Bodenteilen bedeckt werden. Die erfindungsgemäße Drillmaschine ist insbesondere für den Einsatz auf nicht in herkömmlicher Weise zu einem Saatbett bereiteten Boden, sondern auf unbearbeiteten oder die eine flache Stoppelbearbeitung oder einer Einmulchung der obersten Bodenschicht unterzogenen Ackerflächen vorgesehen (Zero- und Minimimtillage).

In einer Ausführungsform ist vorgesehen, daß die Druckelemente einen abgewinkelten Haltestab aufweisen, welche auf einem drehbaren Nabenteil befestigt ist. In einer anderen Ausführungsform ist vorgesehen, daß ein kreisrunder Halteteller vorhanden ist, und daß an diesem Halteteller die Druckelemente befestigt sind. Dieser Halteteller kann auch Durchbrüche aufweisen oder als speichenförmiges Halteelemente ausgebilde sein. Weiterhin kann an diesem Halteteller ein topfförmig umlaufender Rand vorhanden sein, der insbesondere auf weichen und lockeren Böden sicherstellt, daß die Rolle nicht zu tief in den Boden einsinkt und eine gleichmäßige Tiefenführung des Säschares erreicht wird. Hierbei können die Druckelemente beispielsweise an den topfförmigen umlaufenden Rand befestigt werden.

Weiterhin ist vorgesehen, daß die Druckelemente nur einseitig befestigt sind und ein freies Ende aufweisen. Hierdurch bilden die Rollen mit ihren Druckelementen einen offenen topfförmigen Raum, welcher auf der der Befestigungsseite der Druckelemente abgewandten Seite offen ist. So fallen die nach innen gelangende Bodenteile immer aus dem Innenraum der Rolle heraus.

Um die Verstopfungssicherheit der Rollen auch bei schwieristen Verhältnissen zu gewährleisten, ist vorgesehen, daß die Druckelemente den topfförmigen Rand nach außen in seitlicher Richtung um zumindest das Maß seiner Breite überragen.

Dadurch, daß die Druckelemente von ihrer Befestigungsstelle ausgehend einen sich nach außen öffnenden Winkel zur Drehachse einschließen, ist auch insbesondere auf harten und festen Böden gewährleistet, daß die im Säschlitz abgelegten Samenkörner mit Bodenteilen bedeckt werden.

Dieses wird noch dadurch unterstützt, wenn die Druckelemente an ihrem freien Ende jeweils ein nach außen abgewinkeltes Krallenelement aufweisen, denn diese Krallenelemente ziehen und/oder kratzen Bodenteile in die Säfurche zur Bedeckung der in der Säfurche abgelegten Samenkörner. Somit tragen die Krallenelemente vor allem auf festen Böden zur "Schließung" der Säfurche bei. Auch können die Druckelemente zinkenförmig ausgebildet sein.

Um eine Verstopfungssicherheit auf nassen und klebrigen Böden zu gewährleisten, ist für diesen Einsatzfall vorgesehen, daß der Abstand zwischen den Druckelementen 80 bis 160 mm, vorzugsweise ca. 120 mm beträgt.

Dadurch, daß die Druckrolle eine Breite von mindestens 120 mm, vorzugsweise 220 mm aufweist, wird auch auf weichen und bearbeiteten Böden, die in flacher Tiefe eine Stoppelbearbeitung erfahren haben, eine gleichmäßige Tiefenführung des Säschares erreicht. Gleichzeitig werden auch breite Säfurchen zumindest wieder teilweise geschlossen bzw. die in der Säfurche abgelegten Saatkörner werden ausreichend mit Bodenteilen bedeckt.

In einer anderen Ausführungsform dieses erfindungsgemäßen Gegenstandes ist vorgesehen, daß auf der einen Seite des Säschares hinter diesem eine Tiefenführungsrolle und auf der anderen Seite des Säschares hinter diesem ein Säschlitzschließelement angeordnet ist, welches schräg zur Fahrtrichtung eingestellt ist. Auch hierdurch läßt sich eine gleichmäßigere Tiefenführung des Säschares bei einer ausreichenden Bedeckung der in der Säfurche abgelegten Samenkörner mit Bodenteilen erreichen.

Durch die vor erwähnte Druckrolle wird ein Verfahren zum Schließen eines Säschlitzes, welcher von einem Säschar in den Boden gezogen worden ist, mittels einer hinter dem Säschar angeordneten drehbar gelagerten Tiefenführungs- und/oder Druckrolle aufgezeigt. Die Druckrolle weist eine größere Breite quer zur Fahrtrichtung als der Säschlitz quer zur Fahrtrichtung auf, wobei zumindest der eine Seitenbereich der Rolle zumindest teilweise neben dem Säschlitz auf dem von dem Säschar bei der Schaffung des Säschlitzes aufgebrochenen Boden abrollt und der andere Seitenbereich der Rolle einen nach außen abgebogenen Randbereich aufweist, welcher den aufbeworfenen Boden in den Säschlitz schiebt und/oder kratzt, wobei im unteren Bereich der Rolle sich der abgebogene Bereich der Rolle neben den in den Säschlitz abgelegten Samenkörnern sich befindet.

In der Praxis ist beispielsweise durch den Prospekt Amazone NT "The All-Systems Drill" mit Druckvermerk "D606 (GB) 2.89" eine Direktsämaschine mit Meißelscharen bekannt geworden. Diese Drillmaschine ist zum Ausbringen des Saatgutes im Direktsaatverfahren vorgesehen. Das Saatgut wird mittels der Säschare, die in einem unbearbeiteten Boden einen Säschlitz ziehen, abgelegt. Dieser Säschlitz wird von der nachlaufenden, hinter dem Säschar angeordnet Druckrolle wieder geschlossen. Weiterhin ist hinter den Säscharen ein als Exaktstriegel ausgebildetes Nachbearbeitungselement angeordnet, welches die evtl. noch nicht geschlossenen Säschlitze zustreichen und die sich auf der Bodenoberfläche befindlichen Pflanzen- und Strohreste verteilen sollen.

Es hat sich nun in der Praxis gezeigt, daß insbesondere beim Einsatz der Drillmaschine auf mit einer großen Strohmenge bedeckten Bodenoberfläche die Säschare teilweise das sich auf der Bodenoberfläche befindliche Stroh sowie sonstige Pflanzen und Pflanzenteile mit Bodenteilen während des Einbringens von Saatgut zu Häufchen zusammenzuziehen. Weiterhin vermischen sich in diese zusammengezogenen Strohhaufen auch mit Bodenteile. Besonders stark tritt dieses Problem auf, wenn das sich auf der Bodenoberfläche befindliche Stroh nicht gleichmäßig verteilt ist, sondern sehr unregelmäßig von dem Mähdrescher abgelegt worden ist. In diesen Fällen werden die Strohhaufen von den Säscharen mitgeschleppt und bewegen sich dann nach einiger Zeit häufchenweise durch die Maschine zwischen den Säscharen hindurch.

Es hat sich gezeigt, daß der Exaktstriegel die sich zu Häufchen oder in Häufchen befindlichen Stroh- und Bodenteile nicht ausreichend gleichmäßig verteilen kann.

Um die sich auf der Bodenoberfläche befindlichen oder von den Säscharen zu Häufchen zusammengezogenen Pflanzen- und/oder Bodenteile nach dem Ausbringen des Saatgutes auf der Bodenoberfläche zumindest annähernd gleichmäßig zu verteilen, ist vorgesehen, daß das Bearbeitungselement von einer Kraftquelle antreibbar ist.

Infolge dieser Maßnahme werden in überraschender Weise durch das mit einer Kraftquelle angetriebene Nachbearbeitungselement die Stroh- und Bodenhaufen in etwa annähernd gleichmäßiger Weise auf der Bodenoberfläche verteilt, so daß alle im Boden abgelegten Saatkörner gleich gute Auflaufbedingungen erhalten.

Hierbei kann das Nachbearbeitungsgerät um eine quer zur Fahrtrichtung verlaufende Achse drehbar angeordnet sein und um diese Drehachse rotieren. Durch die rotierenden Teile des Nachbearbeitungselementes werden die häufchenweise vorliegende Pflanzen- und Bodenteile zunächst teilweise in einem kleinen Stroh- und Erdwall vor dem Nachbearbeitungselement vorhergeschoben, wobei insbesondere die Pflanzenteile von dem Nachbearbeitungselement erfaßt und nach hinten geworfen werden, während die Bodenteile im wesentlichen unter dem Nachbearbeitungselement hindurchgelangen. Hierdurch findet in überraschend einfacher Weise eine gleichmäßige Ablage des Strohs und dieser Pflanzenteile in lockerer gleichmäßiger Weise oben auf der Bodenoberfläche statt.

Dadurch, daß das Nachbearbeitungsgerät ein rotierendes Tragelement aufweist, wobei auf dem Tragelement Ansätze angeordnet sind, wird eine sehr gute Separierung der Stroh- und Pflanzenteile von den Bodenteilen erreicht. Die Bodenteile werden direkt auf dem Boden abgelegt, auf denen dann die von den Ansätzen des Tragrohres erfaßten Stroh- und Pflanzenreste in einer lockeren und etwa gleichmäßigen Schicht auf dem Boden abgelegt werden. Als besonders zweckmäßig hat sich erwiesen, daß die Ansätze zahnförmig ausgebildet und quer zur Fahrtrichtung nebeneinander angeordnet sind. Durch die zahnförmigen, etwa dreieckförmig ausgebildeten Ansätze wird ein Aufwickeln der Stroh- und Pflanzenreste auf dem Tragrohr vermieden. Um auch im Boden festsitzende und gelockerte Pflanzenteile aus dem Boden herausreißen zu können und auf der Bodenoberfläche locker abzulegen, ist vorgesehen, daß die Ansätze stift- oder zinkenförmig ausgebildet sind.

Um eine optimale Anpassung des Nachbearbeitungselementes an verschiedene Arbeitsbedingungen vornehmen zu können, ist vorgesehen, daß die Ansätze abnehmbar am Tragrohr angeordnet sind. Hierdurch können in einfacher Weise verschiedenartig ausgebildete Ansätze auf dem rotierenden Tragrohr angeordnet werden.

Die Ansätze können frei pendelnd oder gegen Federkraft pendelnd am Tragelement und/oder an den am Tragelement angeordneten Halterungselementen angeordnet sein. Weiterhin können die Ansätze in ihrer Anstellung zur Radialen ein- und verstellbar am Tragelement angeordnet sein.

Besonders zweckmäßig hat sich erwiesen, wenn das Nachbearbeitungselement derart rotierend angetrieben wird, daß es auf seiner Unterseite in Fahrtrichtung rotierend antreibbar ist. Hierdurch ergibt sich eine sog. über Kopfförderung, die sich auf der Bodenoberfläche in Haufen bzw. Häufchen befindlichen Stroh- und Pflanzenteile wie auch bei entsprechender Einstellung des Nachbearbeitungselementes die ürigen Teile werden von dem Nachbearbeitungselement in Form eines kleinen Walles vor sich her geschoben und dann in separierender Weise werden insbesondere die Pflanzen- und Strohteile von den Ansätzen des Nachbearbeitungselementes von den Ansätzen aufgenommen und über das Nachbearbeitungselement hinweg nach hinten gefördert und in einer lockeren Schicht auf die Bodenoberfläche in etwa gleichmäßiger Weise abgelegt.

Hierbei wird ein besonders gutes Arbeitsergebnis dadurch erreicht, wenn vorgesehen ist, daß das Nachbearbeitungselement Stroh oder Pflanzen(teile) über sich nach hinten transportiert und gleichzeitig die sich im Stroh oder in den Pflanzenteilen befindlichen Erdbodenteile unter sich hindurch läßt.

Anstelle des um eine quer zur Fahrtrichtung verlaufenden Drehachse rotierenden Nachbearbeitungselement kann auch eine sich quer zur Fahrtrichtung bewegend angetriebene Vorrichtung vorgesehen sein.

Um gleichzeitig mit dem Aussäen des Saatgutes eine mechanische Unkrautbekämpfung durchführen zu können, ist vorgesehen, daß direkt auf dem Tragelement angebrachte und/oder zusätzlich anbringbare Zinkenelemente vorhanden sind, welche Unkraut aus der mit Hack- und Gänsefußschare gelösten Erdmasse herausziehen und nach hinten-oben abwerfen. Hierbei können die Säschare selbst als Hack- oder Gänsefußscheren ausgebildet sein. Es ist jedoch auch möglich, die Hack- und Gänsefußscheren separat vor den eigentlichen Säscharen am Rahmen der Drillmaschine anzuordnen.

Das Nachbearbeitungselement kann am Rahmen in der Höhe einstellbar angeordnet sein oder aber dem Nachbearbeitungselement können auch zu dessen Höhenführung Höhenführungsrollen, die in bevorzugter Weise in Höhenrichtung einstellbar sind, zugeordnet sein.

Als besonders zweckmäßig hat sich erwiesen, daß das Nachbearbeitungselement mit einer relativ niedrigen Drehzahl von vorzugsweise 180 bis 160 mm rotierend angetrieben wird.

Bei einem Einsatz der Drillmaschine im Zero-Tillage-Verfahren wird man das Nachbearbeitungsgerät derart einstellen, daß die äußeren Enden sich oberhalb oder auf Höhe der Bodenoberfläche befinden, während beim Einsatz der Drillmaschine im Minimum-Tillage-Verfahren die äußeren Enden der Ansätze etwas in den Boden bis etwa oberhalb des abgelegten Saatgutes eindringen. Durch das Eindringen der äußeren Enden der Ansätze des Nachbearbeitungselementes werden die von den Säscharen gelockerten Pflanzen aus dem Boden herausgerissen und auf der Bodenoberfläche abgelegt, so daß eine mechanische Unkrautbekämpfung erfolgt.

Weiterhin ist vorgesehen, daß oberhalb des Nachbearbeitungsgerätes sich ein Querträger befindet. Hierbei hat sich gezeigt, daß, wenn die Stroh- und Pflanzenteile von dem Ansätzen des Nachbearbeitungselementes gegen diesen Querträger geworfen werden, auch in schwierigen Fällen eine Separierung von Pflanzen- und Bodenteilen sicher stattfindet.

Bei dem Einsatz der Drillmaschine auf großen Mengen Stroh- und Pflanzenrückständen bedeckten Bodenflächen hat sich als zweckmäßig erwiesen, diesen Querträger in einem größeren Abstand zu den äußeren Enden der Ansätze anzuordnen und dann an dem Querträger ein sich nach unten in Richtung des Nachbearbeitungselementes mit zinkenförmigen oder kammförmigen Elementen besetztes Schirmelement anzuordnen, welches dann in diesen Fällen eine Separierung der Stroh- und Bodenteile bei einem großen Mengendurchsatz dieser Teile unterstützt.

Weitere Einzelheiten der Erfindung sind den übrigen Unteransprüchen, der Beispielsbeschreibung und den Zeichnungen zu entnehmen. Hierbei zeigen
- Fig. 1: eine Drillmaschine in Kombination mit dem Nachbearbeitungselement in Seitenansicht und in Prinzipdarstellung,

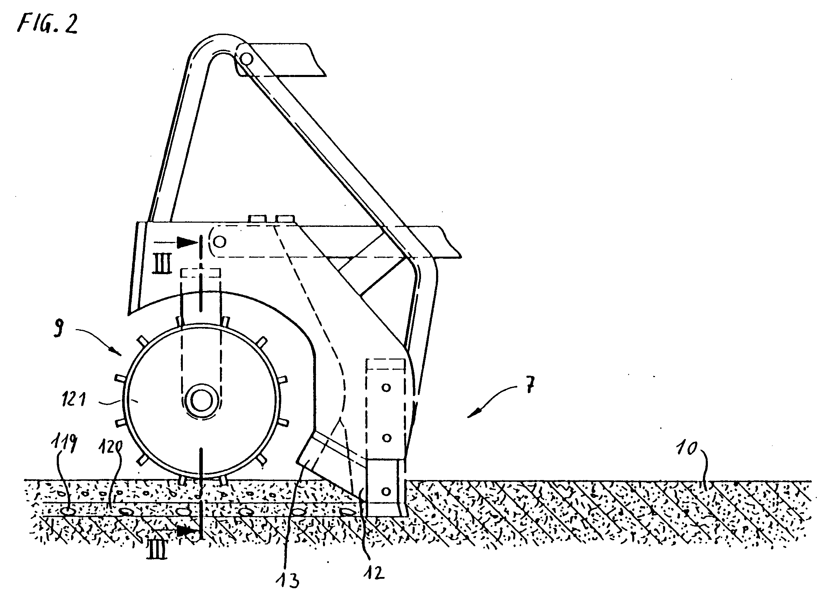

- Fig. 2: ein Säschar mit Tiefenführungsrolle in der Seitenansicht und in vergrößertem Maßstab,
- Fig. 3: die Rolle im Schnitt in der Ansicht III - III in nochmals vergrößertem Maßstab,
- Fig. 4: die Rolle in der Ansicht IV - IV,
- Fig. 5: die Anordnung der Rolle bzgl. der von dem Säschar in den Boden gezogenen Säfurche in der Draufsicht,
- Fig. 6: die Lage der Druckrolle im unteren Bereich bzgl. der Säfurche nach Fig. 5,
- Fig. 7: das Nachbearbeitungselement in der Draufsicht,
- Fig. 8: das Nachbearbeitungselement in der Seitenansicht und in vergrößertem Maßstab,
- Fig. 9: das Nachbearbeitungselement in der Ansicht von hinten gemäß Fig. 8,
- Fig. 10: ein weiteres Nachbearbeitungselement in der Seitenansicht und in Prinzipdarstellung,
- Fig. 11: das Nachbearbeitungselement gemäß Fig. 10 in der Draufsicht, in Prinzipdarstellung und abschnittsweiser Darstellung,
- Fig. 12: ein weiteres Nachbearbeitungselement in Seitenansicht und in Prinzipdarstellung,
- Fig. 13: das Nachbearbeitungselement gemäß Fig. 12 in der Ansicht XII - XII,
- Fig. 14: ein weiteres Nachbearbeitungselement in der Seitenansicht und in Prinzipdarstellung,
- Fig. 15: ein weiteres Nachbearbeitungselement in Seitenansicht und in Prinzipdarstellung,
- Fig. 16: ein weiteres Nachbearbeitungselement in perspektivischer Darstellungsweise und in Prinzipdarstellung,
- Fig. 17: ein weiteres Nachbearbeitungselement in Seitenansicht und Prinzipdarstellung,
- Fig. 18: das Nachbearbeitungselement gemäß Fig. 16 in Seitenansicht,
- Fig. 19: ein weiteres Nachbearbeitungselement in Seitenansicht und in Prinzipdarstellung,
- Fig. 20: das Nachbearbeitungselement gemäß Fig. 19 in Seitenansicht,
- Fig. 21: ein weiteres Nachbearbeitungselement in Seitenansicht und in Prinzipdarstellung,
- Fig. 22: ein Ansatz in der Leiste gemäß Fig. 20 in der Ansicht XXI - XXI in vergrößertem Maßstab,
- Fig. 23: eine Direktsämaschine, welche mit Kultivatorschareinsätzen ausgestattet ist mit dem Nachbearbeitungselement,

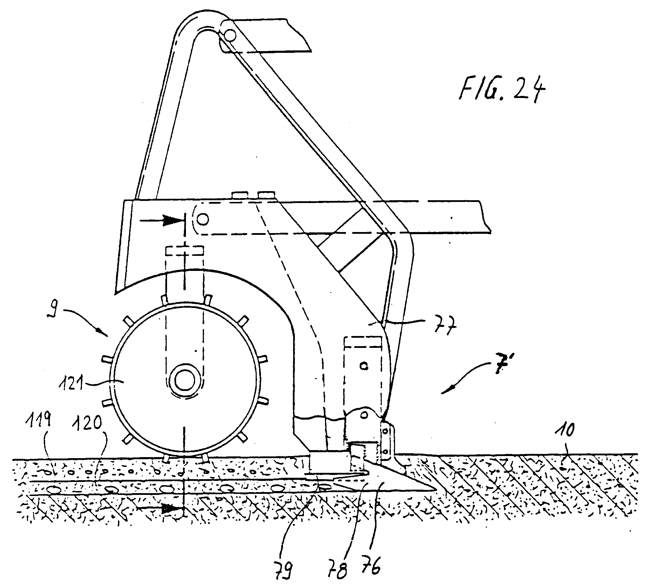

- Fig. 24: ein mit Kultivatorschareinsätzen ausgestattetes Säschar in vergrößertem Maßstab und in Seitenansicht der Sämaschine gemäß Fig. 23,
- Fig. 25: eine Direktsämaschine mit Meißelbandschareinsätzen ausgestattet und dem Nachbearbeitungselement und

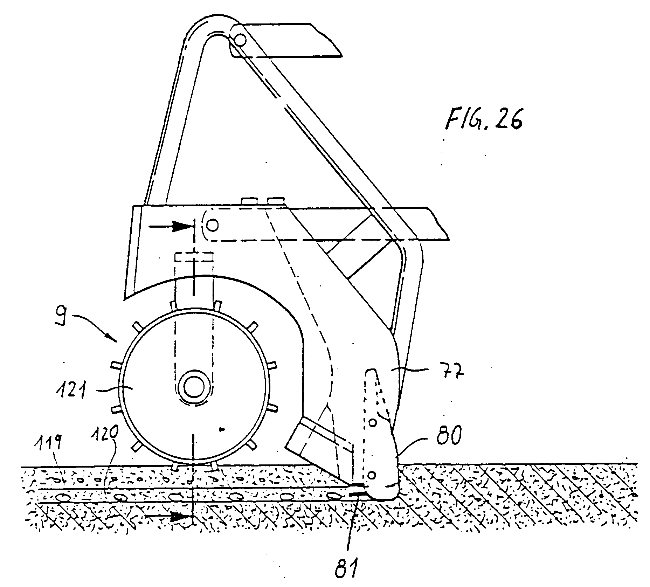

- Fig. 26: ein Säschar mit einem Meißelbandschareinsatz in vergrößerter Darstellung und in Seitenansicht gemäß Fig. 25.

Die Drillmaschine ist mit dem Rahmen 1 und den darauf angeordneten Vorratsbehältereinheiten 2 und 3 ausgestattet. Der Rahmen 1 stützt sich über Laufräder 4 auf dem Boden ab. Am vorderen Rahmenende 5 befindet sich das Pendellaufrad 4' und die als Deichsel ausgebildete Zugvorrichtung 6, mit deren Hilfe die Drillmaschine mit einem Schlepper verbunden über die zu bestellende Bodenoberfläche gezogen wird.

An dem Rahmen 1 sind in vier hintereinander liegenden Reihen jeweils auf Lücke zueinander stehend die als Meißelsäschare 7 ausgebildeten Schare in aufrechter Ebene bewegbar mit Hilfe der Parallelogrammhalterungen 8 angeordnet. Die Meißelschare 7 werden jeweils einzeln über die als Rollen 9 ausgebildeten Tiefenführungselemente in ihrer Eindringtiefe in den Boden 10 geführt. Über die Stellvorrichtung 11 läßt sich die Eindringtiefe der Meißelschare 7 in den Boden 10 zentral verändern.

Die hinter dem Säschar 7 angeordnete Rolle 9 weist den kreisrunden Halteteller 121 auf. Der Halteteller 121 besitzt einen topfförmig umlaufenden Rand 122. An diesem Halteteller 121 und an dem topfförmig umlaufenden Rand 122 sind die als Zinken 123 ausgebildeten Druckelemente in Abständen A zueinander angeordnet, wobei sich zwischen den Zinken 123 jeweils ein Freiraum 124 befindet. Der Abstand A zwischen den Zinken 123 sollte in einem Abstand A zwischen 80 bis 160 mm liegen. Bei Versuchen hat sich herausgestellt, daß ein Abstand A von 120 mm für die meisten Einsatzfälle richtig ist. Die Rolle 9 weist eine Breite B von 180 mm auf, wobei sich bei Versuchen herausgestellt hat, daß eine Breite von 120 mm ausreichend ist. Die Zinken 123 sind jeweils nur einseitig an dem Halteteller 121 befestigt und weisen ein seitwärts nach außen gerichtetes freies Ende 125 auf. An ihrem freien Ende 125 befindet sich jeweils ein nach außen abgewinkeltes Krallenelement 126. Weiterhin sind die Zinken 123 von ihrer Befestigungsstelle 127 aus gesehen unter einem sich nach außen öffnenden Winkel zur Drehachse 128 der Rolle 9 angeordnet. Somit bilden die Zinken 123 einen offenen topfförmigen Freiraum 129, welcher von der Befestigungsseite ausgehend nach außen offen ist. Die Druckrolle 9 ist in Draufsicht gesehen unter einen Winkel β schräg zur Fahrtrichtung 19 angestellt. Der Winkel β sollte mindestens 5°, maximal 15° betragen, wobe sich bei Versuchen herausgestellt hat, daß ein Winkel zwischen 5 - 12°, insbesondere ein Winkel β von etwa 8° die größten Vorteile bietet. Die Zinken 123 können elastisch ausgebildet und/oder elastisch an dem Halteteller 121 befestigt sein. Auch der Halteteller kann elastisch ausgebildet sein, so daß sich für die Zinken 123 eine elastische Befestigung ergibt.

Die Druckrolle 9 ist seitlich versetzt zur Mittellinie des Säschares 7 angeordnet. Es muß hierbei beachtet werden, daß die Druckrolle 9 derart gegenüber dem Säschar 7 angeordnet ist, daß die Krallenelemente 126 der Druckrolle 9 nicht die der Säfurche 120 abgelegten Saatkörner 119 aus der Säfurche 120 herausreißen oder berühren. Diese bedeutet, daß die krallenförmigen Elemente 126 sich seitlich nach außen versetzt von der Mittellinie der Säfurche 120 in einem Abstand befinden müssen.

Die Funktionsweise der Druckrolle 9 ist folgende:

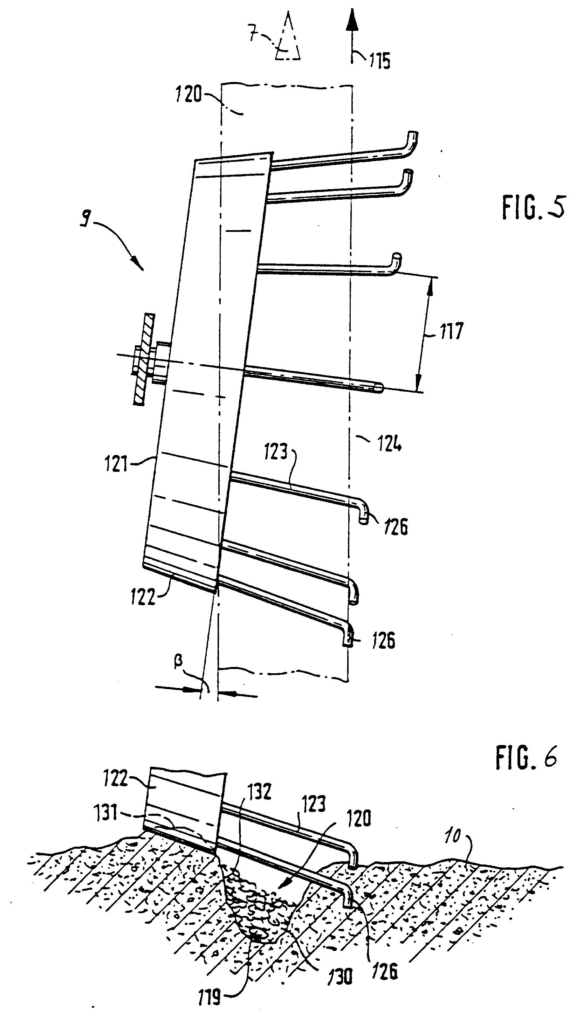

Über die Rolle 9, die sich mit ihrem topfförmigen Rand 122 und den Zinken 123 auf den Boden 10 neben der Säfurche 120 beidseitig abstützt, wird zunächst eine gleichmäßige Schartiefenführung auch bei wechselnden Bodenverhältnissen erreicht. Dieses gilt sowohl für härteren wie auch für weicheren bearbeiteten Boden. Wie die Fig. 4 und 5 bei einem Einsatz der Drillmaschine auf einem weicherem Boden zeigen, reißt das Säschar 7 mit der Scharspitze 16 eine relativ breite Säfurche 120 in den Boden. Nach Schaffung der Säfurche 120 werden bevor die Rolle 9 die Säfurche 120 wieder mit Bodenteilen 130 auffüllt, die Samenkörner 119 auf dem Grund der Säfurche 120 abgelegt. Dadurch, daß die Rolle 9 schräg zur Fahrtrichtung 19 angestellt ist, kratzen bzw. schieben die Zinken 123 und die Krallen 126 Bodenteile 130 in die Säfurche 120 und füllen die Säfurche 120 wieder auf. Gleichzeitig drückt der topfförmige Rand 122 den seitlich von der Säfurche 120 aufgeworfenen Boden 131 bzw. die Seitenflanke 132 der Säfurche 120 in die Säfurche 120 zurück. Hierdurch wird somit sichergestellt, daß die Samenkörner 119 mit ausreichenden Bodenteilen 120 bedeckt werden. Weiterhin werden durch die Zinken 123 evtl. an den Säscharen 1 festhängenden längeren Pflanzenteilen auf den Boden 10 gedrückt und halten diese fest, so daß bei Vorwärtsbewegung des Säschares 7 diese an dem Säschar 7 anhängenden Bodenteile von dem Säschar 7 weggezogen werden.

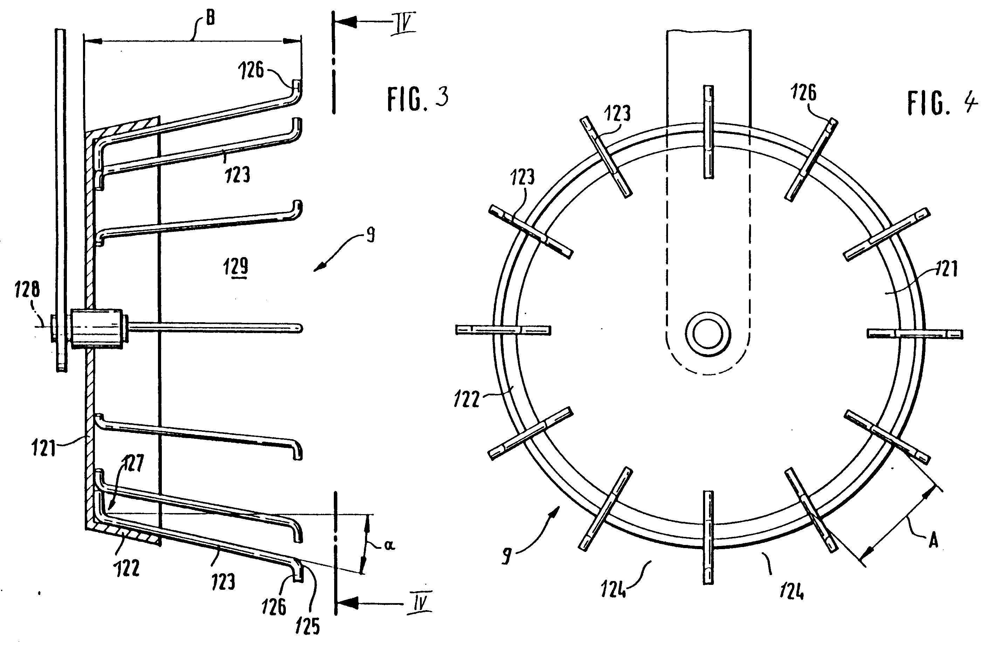

Die Meißelschare 7 sind jeweils mit dem voneinander getrennten Saatguteinläufen 12 und Düngereinläufen 13 versehen, so daß Saatgut und Düngemittel getrennt in dem von dem Meißelsäscharen 7 erzeugten Säfurchen abgelegt werden. Hinter der letzten Reihe der Meißelsäschare 7 ist der als Nachbearbeitungselement 13 ausgebildete Nachbearbeitungsrotor angeordnet. Das Nachbearbeitungselement 13 weist den Rahmen 14 auf. Das Nachbearbeitungselement 13 ist als um die quer zur Fahrtrichtung verlaufende Drehachse 15 rotierend angtreibbar. Das Nachbearbeitungselement 13 weist ein drehbar gelagertes Tragelement 16 auf, welches als Tragrohr ausgebildet ist. Auf dem Tragrohrmantel 17 sind die Ansätze 18 angeordnet. Die Ansätze 18 sind, wie Fig. 3 zeigt, zahnförmig ausgebildet, wobei im Ausführungsbeispiel die Ansätze 18 sägezahnförmig sind. Die zahnförmigen Ansätze 18 sind quer zur Fahrtrichtung 19 nebeneinander angeordnet. Das Nachbearbeitungselement 13 wird von der als Ölmotor 20 ausgebildeten Kraftquelle über den Kettenantrieb 21 rotierend angetrieben. Hierbei ist die Drehrichtung 22 des Nachbearbeitungselementes 13 derart, daß das Nachbearbeitungselement 13 auf seiner Unterseite in Fahrtrichtung 19 rotiert, wie durch den Pfeil 22 gekennzeichnet ist. Die Ansätze 18, die als Mitnehmerelemente ausgebildet sind, sind so ausgebildet, daß das Nachbearbeitungselement 13 Stroh oder Pflanzenteile über sich nach hinten transportiert und gleichzeitig sich im Stroh oder in den Pflanzenteilen sich befindliche Erdbodenteile unter sich hindurch läßt.

Das Nachbearbeitungselement 13 ist mittels des Rahmens 14, der Haltearme 23 und der Gelenke 24 in aufrechter Ebene höhenbeweglich am Rahmen 1 der Drillmaschine angeordnet. Über die Einstellelemente 25 kann die Höhenlage des Nachbearbeitungselementes 13 gegenüber dem Boden 10 einstellt werden. Zwischen dem Rahmen 1 der Drillmaschine und dem Rahmen 14 des Bodenbearbeitungselementes ist zumindest eine Zugfeder 26 angeordnet, die ein Teil des Gewichtes des Nachbearbeitungselementes 13 kompensiert, so daß, falls das Nachbearbeitungselement 13 auf aus dem Boden herausragende Steine oder andere Hindernisse auftrifft, leicht nach oben ausweichen kann. Mittels des Hydraulikzylinders 27 kann das Nachbearbeitungselement 13 am Feldende ausgehogen werden.

Das Nachbearbeitungselement 13 wird mit einer Drehzahl von 100 -400, vorzugsweise 160 -180 Umdrehungen pro Minute, also mit einer relativ niedrigen Drehzahl, rotierend angetrieben. Der Durchmesser A des Tragrohres 16 sollte in einer Größenordnung von 120 -250 mm, vorzugsweise 160 mm liegen. Der Flugkreisdurchmesser B der äußeren Enden 27 der Ansätze 18 beträgt 240 - 500, vorzugsweise 300 - 350 mm.

Der Rahmen 14 des Nachbearbeitungselementes 13 weist oberhalb des Nachbearbeitungselementes 13 einen Querträger 28 auf, an welchem die Haltearme 24 befestigt sind. Das Nachbearbeitungselement 13 erstreckt sich über di Arbeitsbreite der Drillmaschine.

Die Funktionsweise des Nachbearbeitungselementes 13 wird anhand der Fig. 8 näher erläutert:

Die von den Säscharen 7 zusammengezogene oder bewegten Stroh- und/oder Pflanzenteile 29 werden von dem Nachbearbeitungselement 13 erfaßt. Hierbei schiebt das Nachbearbeitungselement 13 einen kleinen Wall 30, der Stroh und evtl. mit dem Stroh vermischte Bodenteile enthält, vor sich her. Hierbei werden von den Ansätzen 18 das Stroh und die Pflanzenteile in diesem kleinen Wall 30 erfaßt und, wie in Fig. 8 angedeutet, in Drehrichtung 22 entgegen der Fahrtrichtung 19 über das Nachbearbeitungselement 13 hinweg auf die Bodenoberfläche 10 hinter dem Nachbearbeitungselement 13, wie in Fig. 8 angedeutet, geworfen. Hierbei findet durch das Aufnehmen der Stroh- und Pflanzenteile 29 durch die Ansätze 18 aus dem Wall 30 eine Separierung der Stroh- und Pflanzenteile 29 von den evtl. hierin enthaltenen Bodenteilen 31 stand. Das Stroh und die Pflanzenteile 29, werden, wie vor erwähnt, von den Ansätzen 18 erfaßt, nach hinten geworfen und auf der Bodenoberfläche 10 in einer gleichmäßigen lockeren Schicht 32 abgelegt, während die sich im Stroh oder in den Pflanzenteilen 29 befindlichen Erdbodenteile 31 unter dem Nachbearbeitungselement 13 hindurch gelangen. Das Nachbearbeitungselement 13 verteilt gleichzeitig diese Bodenteile 31 auf der Bodenoberfläche 10 unmittelbar auf und in die Säfurchen, welche evtl. von den hinter den Säscharen 7 angeordneten Rollen 9 nicht ausreichend geschlossen sind. Die Säfurchen werden von diesem Nachbearbeitungelementen mit Bodenteilen geschlossen.

Zusammenfassend läßt sich also folgendes feststellen:

Durch die Meißelsäschare 7 werden Säfurchen 120 in den Boden gezogen, in welchem das Saatgut 119 abgelegt wird. Durch die hinter den Säscharen 7 angeordneten Rollen 9 werden die Säfurchen 119 zumindest teilweise wieder geschlossen, so daß die in den Säfurchen 120 abgelegten Samenkörner 119 mit Bodenteilen bedeckt sind. Anschließend werden die sich auf der Bodenoberfläche befindlichen teilweise in Haufen und/oder Häufchen befindlichen, teilweise mit Bodenteilen vermischten Pflanzen- und Pflanzenrückständen von dem angetriebenen und sich oberhalb der Bodenoberfläche befindlichen Nachbearbeitungsrotor 13 mit dem im wesentlichen oberhalb des Erdbodens 10 motorisch bewegten zinkenartigen Elementen 18 aufgenommen und anschließend wieder in vergleichmäßigter Weise oberhalb des Bodens 10 des abgelegten Saatgutes 119 abgelegt. Durch das Aufnehmen der Pflanzen und Pflanzenrückstände erfolgt zumindest teilweise eine Separierung der Pflanzenteile von den Bodenteilen. Gleichzeitig erfolgt eine vergleichmäßigte Ablage der Pflanzen und Pflanzenrückstände auf dem Boden 10. Mit dem Nachbearbeitungsrotor 13 werden die Pflanzen und Pflanzenrückstände, auch wenn sie in Haufen vorliegen, separiert, d.h., die Stroh- bzw. Grünmasse wird von den Bodenteilen getrennt und beides wird in vergleichmäßigter Weise und in egalisierter Form, d.h., das das Stroh bzw. die Grünmasse dabei getrennt von den Bodenteilen oben auf der Bodenoberfläche abgelegt wird. Dadurch, daß der Rotor 13 derart einstellbar ist, daß der Rotor 13 Bodenteile in die Säfurche 120 fördert, so daß die Säfurche 120 sicher geschlossen und die in der Säfurche abgelegten Samenkörner 119 mit Bodenteilen bedeckt werden, erhalten die Samenkörner optimale Auflaufbedingungen. Der Rotor 13 schiebt die Stroh bzw. Grünmasse vermischt mit Bodenteilen vor sich her, wobei durch den Rotor 13 eine Separierung dieses Gemisches erfolgt, so daß im wesentlichen nur die Bodenteile in die Säfurche gefördert werden, während die Stroh- und Grünmasseanteile dieses Mischhaufens von dem Rotor erfaßt und in vergleichmäßigter Weise oberhalb des abgelegten Saatgutes abgelegt wird.

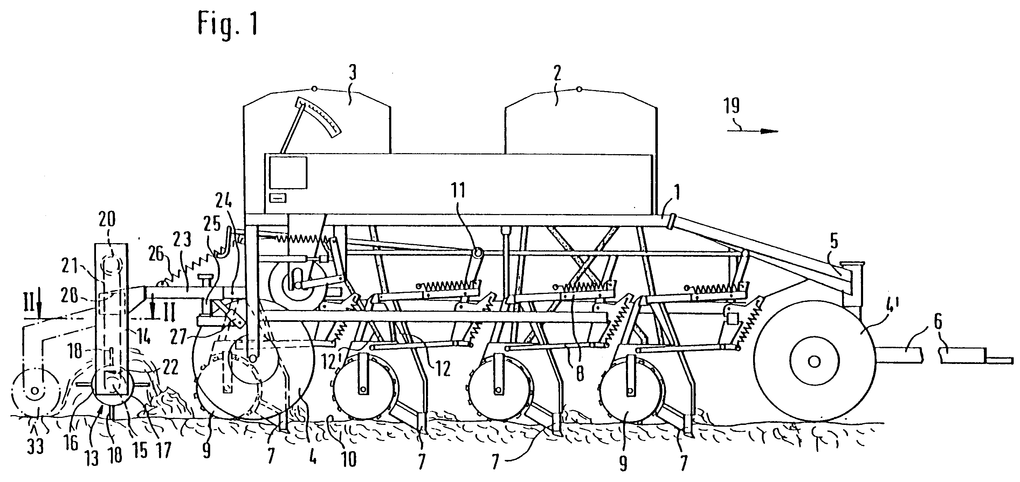

An dem Rahmen 14 bzw. dem Querträger 28 können noch zusätzlich, wie in Fig. 1 mit strichpunktierten Linien angedeutet ist, Höhenführungsrollen oder -räder 33 angeordnet sein, welche das Nachbearbeitungselement 13 in der gewünschten Höhenlage in bezug auf die Bodenoberfläche führen.

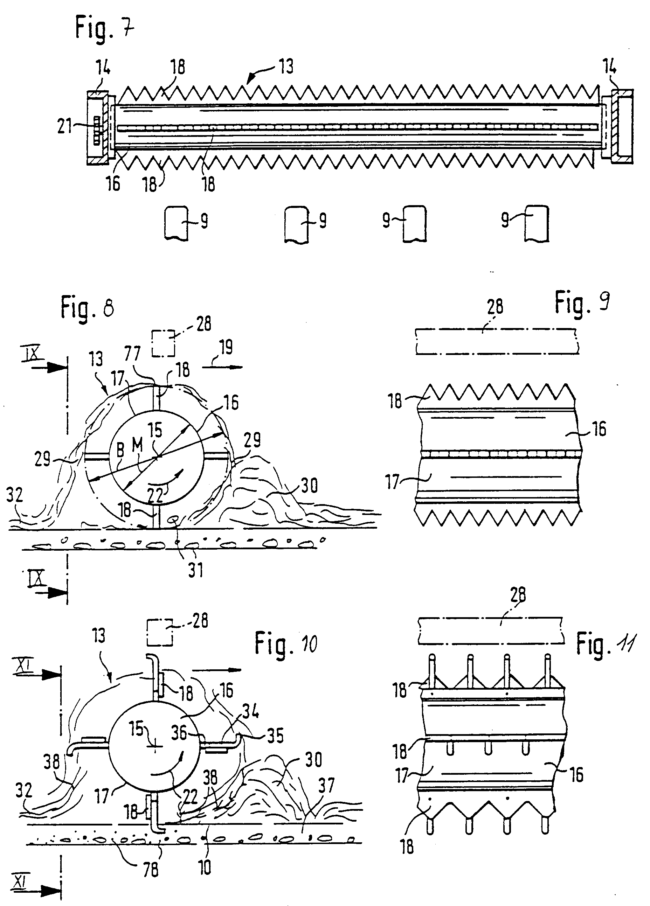

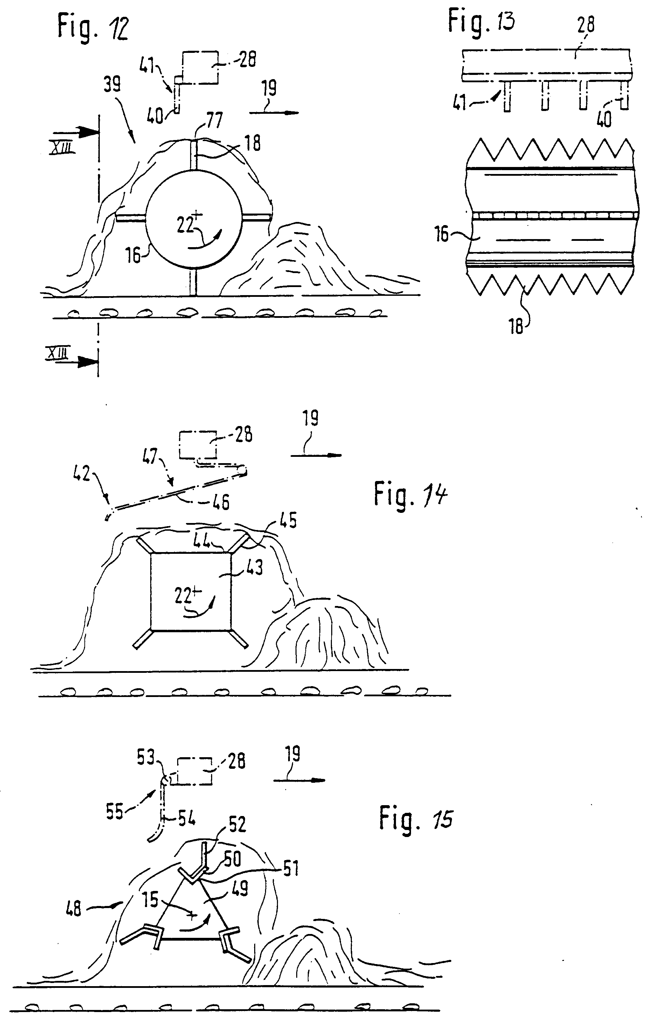

Bei dem Ausführungsbeispiel gemäß den Fig. 10 und 11 sind zusätzlich zu den Ansätzen 18 an dem Nachbearbeitungselemnt noch stiftförmige Ansätze 34 befestigt, welche an ihren äußeren Enden 35 in Drehrichtung 22 abgewinkelt sind. Diese stiftförmigen Ansätze 34 sind jeweils an Leisten 36 befestigt, welche mittels Schrauben an den Halterungen des Nachbearbeitungselementes 13 befestigt sind, welche in diesem Falle gleichzeitig von den zahnförmigen Ansätzen 18 gebildet werden. Dieses mit den zusätzlichen stiftförmigen Ansätzen 34 ausgerüstete Nachbearbeitungselement wird vor allem bei dem Minimum-Tillage-Verfahren eingesetzt, wenn gleichzeitig durch die Säschare 7 selbst, die beispielsweise als Kultivator- oder Hackschare oder Gänsefußschare ausgebildet sind oder durch vor den Säscharen zusätzlich angeordnete Hack-, Kultivator- oder Gänsefußschare, der Boden bearbeitet wird. Durch diese Schare erfolgt eine Minimum-Bodenbearbeitung zur Unkrautbekämpfung. Die sich in der gelockerten Bodenschicht 37 befindlichen und zumindest teilweise im Boden im Wurzelbereich abgeschnitten Pflanzen 38 werden dann von den stiftförmigen Ansätzen 34 aus dem Boden 37 herausgerissen und von den Ansätzen 34 in Drehrichtung 22 über das Nachbearbeitungselement hinweg geworfen und in einer lockeren Schicht 32 auf der Bodenoberfläche 10 abgelegt. Hierbei ist das Nachbearbeitungselement derart eingestellt, daß die äußeren Enden 35 der stiftförmigen Ansätze 34 etwas in den Boden 10 eindringen und bis etwa oberhalb des im Boden 10 abgelegten Saatgutes 39 eindringen. Die Einstellung muß derart erfolgen, daß keinesfalls die Ansätze 34 das im Boden 10 abgelegte Saatgut 39 berühren bzw. aus dem Boden 10 herauswerfen. Somit erfolgt also in einem Arbeitsgang eine mechanische Unkrautbekämpfung, die von den den Boden 10 unterschneidenden Gänsefuß- oder Hackscharen eingeleitet und von dem Nachbearbeitungselement 13 beendet wird, in dem diese die sich in der gelockerten Bodenschicht 37 befindlichen Pflanzenteile 38 aus dem Boden herausreißen und über das Nachbearbeitungselement 13 nach hinten werfen und in einer lockeren Schicht 32 auf der Bodenobefläche 10 ablegen. Hier vertrocknen dann diese abgelegten Pflanzen- und Unkrautteile.

Das Nachbearbeitungselement 39 gemäß den Fig. 12 und 13 unterscheidet sich von dem Nachbearbeitungselement 13 gemäß Fig. 8 dadurch, daß der Querträger 28 in einem etwas größeren Abstand zu dem Flugkreis der äußeren Enden 27 der Ansätze 18 angeordnet ist. An dem Querträger 28 ist ein sich nach unten in Richtung des Nachbearbeitungselementes erstreckendes und mit zinkenförmigen bzw. kammförmigen Elementen 40 besetztes Schirmelement 41 angeordnet. Insbesondere bei sich in großen Mengen auf der Bodenoberfläche befindlichen Stroh- und Pflanzenteilen eignet sich diese Ausführung, insbesondere wenn die Stroh- und Pflanzenteile mit viel Erde vermischt sind. Hierdurch wird eine gute Separierung von Stroh- und Pflanzenteilen von den Bodenteilen erreicht.

Die einzelnen Zinken 40 des kammartigen Abschirmelementes 41 können an dem Querträger 28 starr befestigt oder falls erwünscht, frei oder gegen Federkraft pendelnd aufgehängt sein.

Bei dem Nachbearbeitungselement 42 gemäß Fig. 14 ist das Tragelement 43 als Quadratrohr ausgebildet. An den Längskanten 44 des Quadratrohres 43 sind die stiftförmigen Ansätze 45 befestigt. Die Funktionsweise des Nachbearbeitungselementes 42 gemäß Fig. 14 entspricht dem Nachbearbeitungselement 13, wie zu Fig. 3 erläutert. Oberhalb des drehbar gelagerten und motorisch angetriebenen Nachbearbeitungselementes 42 befindet sich der Querträger 28, an dem ein aus Federzinken 46 bestehendes Schirmelement angeordnet ist. Die Zinken 46 des Schirmelementes 47 erstrecken sich nach hinten-unten.

Das Nachbearbeitungselement 48 gemäß Fig. 15 zeigt einen Tragkörper 49 mit in Dreiecksform zueinander angeordneten Winkelelementen 50, die sich längs der Drehachse 15 erstrecken. An dem einen Schenkel des winkelförmigen Längselementes 50 sind jeweils die zahnförmigen Ansätze 52, wie sie beispielsweise in Fig. 9 gezeigt sind, angeschraubt. Oberhalb des drehbaren und motorisch angetriebenen Nachbearbeitungselementes 48 befindet sich der Querträger 28, auf dessen Rückseite die eine Federwindung 53 aufweisenden zinkenförmigen Elemente 54 des Schirmelementes 55 angeordnet sind.

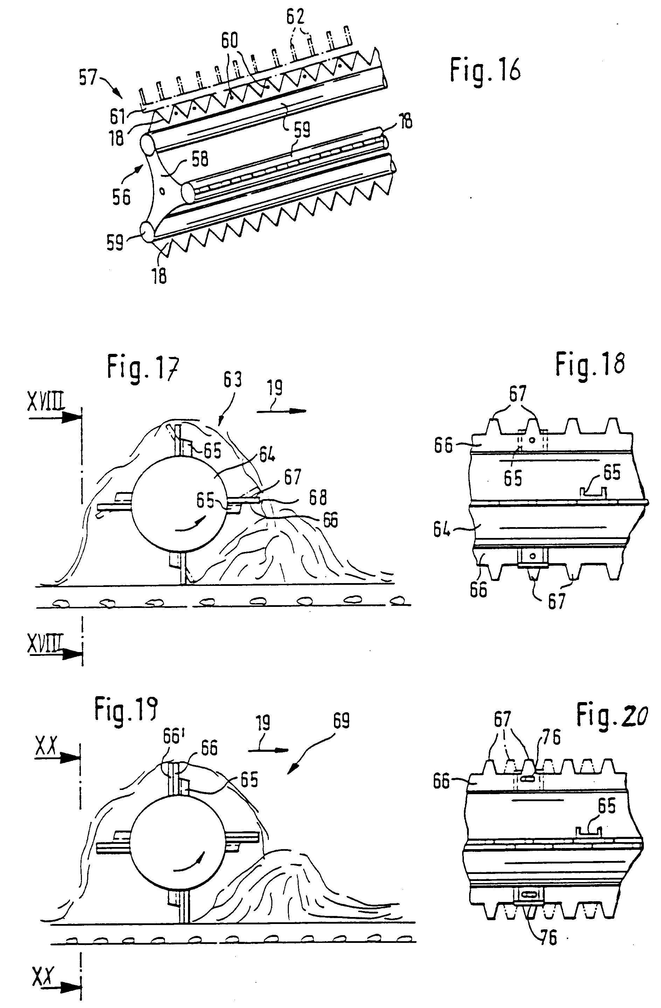

Die Fig. 16 zeigt in perspektivischer Darstellung, das rotierende Tragelement 56 des Nachbearbeitungselementes 57. Das Tragelement 56 weist mehrere dreieckförmige Stützscheiben 58 auf, in deren Eckpunkten die stabförmigen Längselemente 59 befestigt sind. Auf den Längselementen 59 sind die zahnförmigen Ansätze 18 angeordnet. An diesen zahnförmigen Ansätzen 18 können mittels Befestigungselementen 60, die beispielsweise als Schrauben ausgebildet sind, die mit strichpunktierten Linien dargestellten zusätzlichen Ansätze 61 angeordnet werden, welche beispielsweise Stifte 62 aufweisen, so daß sich kammförmige Ansätze 61 ergeben.

Das Nachbearbeitungsgelement 63 gemäß den Fig. 17 und 18 weist das aus einem Tragrohr 64 bestehende Tragelement auf, an welchem die Halterungselemente 65 befestigt sind. An diesen Halterungselementen 65 werden die zu einer Leiste 66 zusammengefaßten zahnförmigen Ansätze 67 befestigt. Die äußeren Enden 68 der Ansätze 67 können radial ausgebildet sein oder die äußeren Enden können gegenüber der Radiale im Winkel, wie mit strichpunktierten Linien dargestellt ist, angestellt sein.

Das Nachbearbeitungselement 69 gemäß den Fig. 19 und 20 unterscheidet sich von dem Nachbearbeitungselement 63 gemäß Fig. 17 dadurch, daß an den Halterungen 65 zwei zu einer Leiste 66 und 66' zusammengefaßten zahnförmigen Ansatzelemente 67 angeordnet sind, wobei die eine Leiste 66' im Bereich der Halterungen jeweils ein Langloch 69 aufweist, so daß die eine Leiste 66' gegenüber der anderen Leiste 66 verschoben werden kann. Hierdurch ist es möglich die Abstände zwischen den einzelnen Ansätzen 67 zu variieren. Hierbei kann in der einen Endposition die eine Leiste 66' soweit verschoben werden, daß die Ansätze 67 sich decken. In der anderen Endposition befindet sich jeweils der eine Ansatz 67 in der Mitte zwischen zwei Ansätzen 67 der anderen Leiste 66.

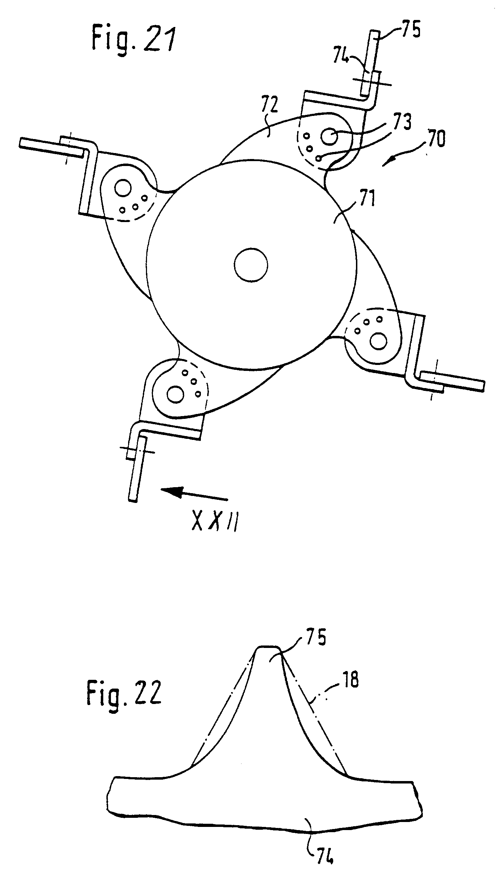

Das Nachbearbeitungselement 70 gemäß Fig. 21 besitzt das rohrförmige Tragelement 71. An diesem Tragelement 71 sind in Abständen zueinander die Halterungselemente 72 angeordnet, welche mehrere in Drehachsenrichtung verlaufende Bohrungen 73 aufweist. An diesen Halterungselementen 72 sind die zu einer Leiste 74 zusammengefaßten Ansätze 75 angeordnet, welche in unterschiedlichen Winkeln zur Radialen angestellt werden können. Die Ansätze 75 sind im Vergleich zu den mit strichpunktierten Linien angedeuteten dreieckförmigen Ansätzen 18 schlanker ausgebildet.

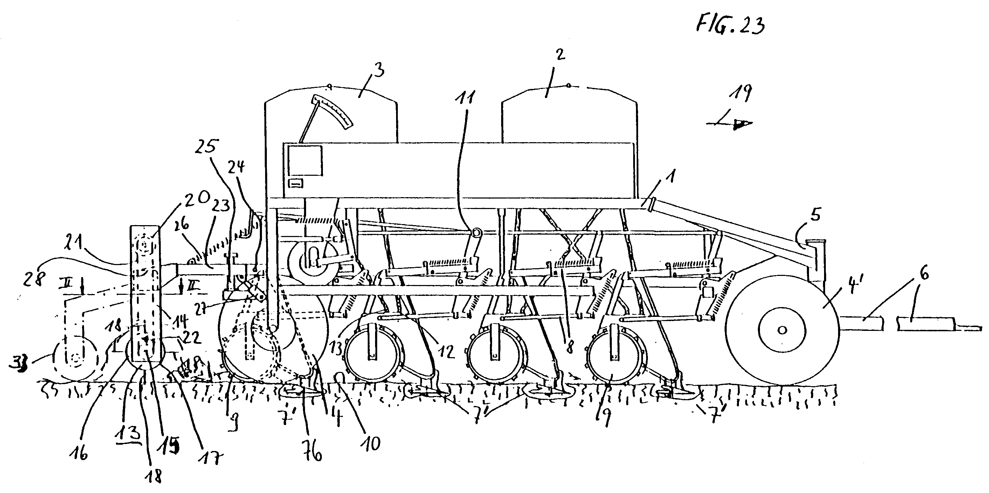

Die Direktsämaschine gemäß Fig. 23 unterscheidet sich von der Direktsämaschine gemäß Fig. 1 durch eine andere Ausbildung der Schareinsätze. Die Direktsämaschine gemäß Fig. 23 ist mit Hackschareinsätzen 76 ausgestattet. Das Säschar 7' besteht aus der Halterung 77 und dem Hackschareinsatz 76. Dieser Hackschareinsatz 76 ist an Stelle des Meißeleinsatzes in die Halterung 77 des Säschares eingesetzt. Das Hackschar 76 weist seitlich abstehende Scharflügel 78 auf. Unterhalb des Saatgutauslaufes ist ein Prallkörper 79 zur Breitverteilung des Saatgutes angeordnet. Die Schareinsätze 76 sind lös- und austauschbar in den Halterungen 77 befestigt. Die Hackschare 76 schneiden mit ihren Flügeln 79 den Boden in einer gewissen Tiefe auf und schneiden hierbei im Boden wachsenden Pflanzen ab. Durch die Flügel 79 der Hackschare 76 wird also gleichzeitig mit dem Sävorgang eine mechanische Unkrautbekämpfung vorgenommen. Der Bearbeitungsrotor 13 ist hierbei auf einer derartigen Arbeitstiefe eingestellt, daß die Ansatz- oder Zinkenspitzen geringfügig, d.h., 1 - 3 cm tief in den Boden 10 eingreifen und so die von den Hackscharen 76 abgeschnittenen Pflanzen aus dem Boden 10 herausreißen und nach hinten werfen, wobei eine weitgehende Separierung von Pflanzen- und Bodenteilen erfolgt. Die abgeschnittenen Unkrautpflanzen bzw. Pflanzen des Auflaufgetreides (zum Teil auch noch mit ihren Wurzeln) werden hierdurch besser vom Boden getrennt oben auf der Bodenoberfläche durch den Nachbearbeitungsrotor 13 abgelegt und können dort verwelken; wodurch sie als Konkurrenz für die eingesäten Nutzpflanzen wirksam ausgeschaltet werden.

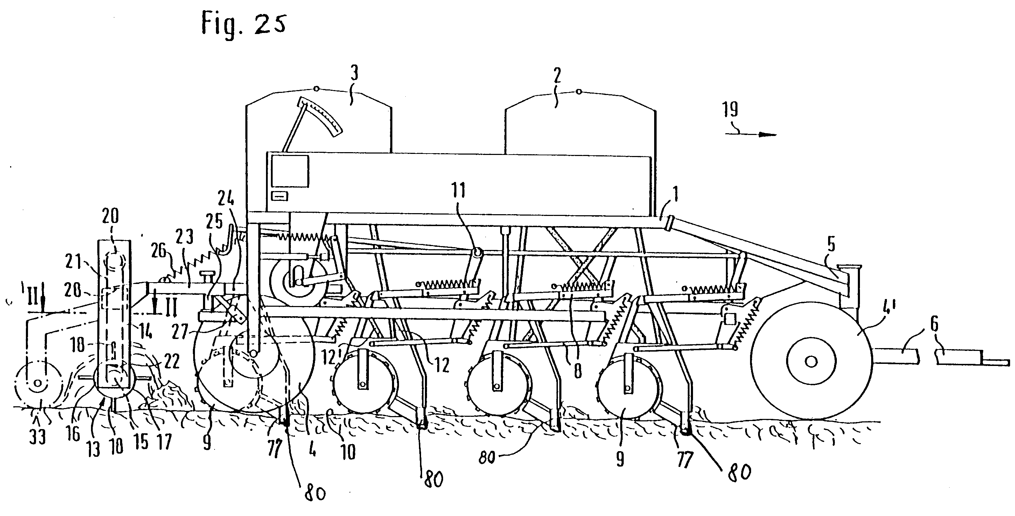

Bei der Direktsämaschine gemäß Fig. 25 sind in die Halterungen 77 der Scharkörper anstelle der Meißeleinsätze bzw. der Hackschareinsätze 76 Meißelbandschare 80 eingesetzt. Dieser Bandschareinsatz 80 weist quer zur Fahrtrichtung in seinem hinteren Bereich eine Breite von etwa 8 cm auf. Unterhalb des Saatgutauslaufes ist an der Rückseite des Meißelbandschareinsatzes 80 ein Prallkörper 81 zur Breitverteilung des Saatgutes in der Säfurche 120' angeordnet. Durch den Nachbearbeitungsrotor 13 erfolgt eine sichere Bedeckung des in Breitverteilung in der breiten Säfurche 120' abgelegten Saatgutes 119 mit Bodenteilen in vorbeschriebener Weise. An dieser Stelle sei nur kurz wiederholt, daß der Nachbearbeitungsrotor 13 einen kleine Wall von Bodenteilen vor sich her schiebt, so daß diese Bodenteile in die Säfurche 120' gefördert werden, so daß eine ausreichende Bedeckung des Saatgutes 119 mit Bodenteilen erfolgt.

## Patentansprüche

1. Direktsaatverfahren, d.h. Zerotillage- und/oder Minimumtillage- Verfahren, zum Einbringen von Saatgut in den Boden,
bei dem das Saatgut (119) in von Säscharen (7, 7', 76, 80) erzeugten Säfurchen (120) in dem Boden (10) abgelegt wird, gekennzeichnet durch die nachfolgenden Merkmale:
a.) nach dem Ablegen des Saatgutes (119) in dem Boden (10) werden die sich auf der Bodenoberfläche befindlichen und teilweise in Haufen und/oder Häufchen befindlichen, teilweise mit Bodenteilen (31) vermischten Pflanzen- und Pflanzenrückstände (29) von einem angetriebenen sich oberhalb der Bodenoberfläche befindlichen, hinter den Säscharen angeordneten Bearbeitungsrotor (13, 39, 42, 48) mit im wesentlichen oberhalb des Erdbodens (10) motorisch bewegten zinkenartigen Elementen (18, 34, 45, 52) aufgenommen und anschließend wieder in vergleichmäßigter Weise oberhalb des Bodens (10) und des abgelegten Saatgutes (119) abgelegt,
b.) durch das Aufnehmen dieser Häufchen erfolgt eine zumindest teilweise Separierung der Pflanzteile (29) von den Bodenteilen (31).

2. Direktsaatverfahren nach Anspruch 1, dadurch gekennzeichnet, daß der Rotor (13, 39, 42, 48) derart eingestellbar ist, daß der Rotor (13, 39, 42, 48) Bodenteile in die Säfurche fördert, so daß die Säfurche geschlossen und/oder die in der Säfurche abgelegten Saatkörner (119) mit Bodenteilen (31) bedeckt werden.

3. Direktsämaschine für das Direktsaatverfahren, d.h. Zerotillage- und/oder Minimumtillageverfahren, mit Rahmen, Vorratsbehälter und mindestens drei, vorzugsweise vier hintereinander. liegenden Querreihen in Lücke zueinander. angoerdnet Säscharen (7), denen Tiefenfürungsrollen (9) zugeordnet sind, die die Säscharen (7) in ihrer. Eindringtiefe in den Boden tragen, wobei der Scharabstand mindestens 50 cm beträgt, dadurch gekennzeichnet, daß hinter den Säscharen zumindest ein angetriebener Bearbeitungsrotor (13, 39, 42, 48) mit oberhalb des Erdbodens (10) motorisch bewegten Zinken (18, 34, 45, 52) angeordnet ist, dessen Drehrichtung vorzugsweise derart gewählt ist, daß die Unterseite des Rotors in Fahrtrichtung (19) rotiert, so daß im Betrieb
die sich auf der Bodenoberfläche befindlichen und teilweise in Haufen und/oder Häufchen befindlichen, teilweise mit Bodenteilen (31) vermischten Pflanzen- und Pflanzenrückstände (29) vom Bearbeitungsrotor (13, 39, 42, 48) aufgenommen und anschließend wieder in vergleichmäßigter Weise oberhalb des Bodens (10) und des abgelegten Saatgutes (119) abgelegt werden und
durch das Aufnehmen dieser Häufchen eine zumindest teilweise Separierung der Pflanzenteile (29) von den Bodenteilen (31) erfolgt.

4. Direktsämaschine nach Anspruch 3, dadurch gekennzeichnet, daß die Säschare als Meißelschare (7) oder als Kultivator- oder Hackschare (76) ausgebildet sind, welche unterhalb des Saatgutauslaufes und dicht unterhalb ihres unteren Endes zumindest einen Prallkörper (79) zu Breitverteilung des Saatgutes (119) aufweisen.

5. Direktsämaschine nach einem oder mehreren der vorstehenden Ansprüche, dadurch gekennzeichnet, daß die Säschare (7,7') Halterungen (77) und Scharkörper aufweisen, daß an den Halterungen (77) die Scharkörper (76, 80) lös- und austauschbar befestigt sind, daß wahlweise als Meißelschare (7), Band-, Meißelbandschare (80) oder Kultivatorschare (76) ausgebildete Scharkörper an den Halterungen (77) befestigbar sind.

6. Direktsämaschine nach einem oder mehreren der vorstehenden Ansprüche, dadurch gekennzeichnet, daß die Kultivatorschare (76) seitlich abstehende Scharflügel (78) besitzen, und daß unter den Scharflügeln (78) und unterhalb des Saatgutauslaufes ein Prallkörper (79) angeordnet ist.

7. Direktsämaschine nach einem oder mehreren der vorstehenden Ansprüche, dadurch gekennzeichnet, daß der Bearbeitungsrotor (13,39,42,48) einen Durchmesser von mindestens 20 cm aufweist, daß auf der Mantelfläche des Rotors (13,39,42,48) Zinken- oder Ansätze (18,34,45,52) angeordnet sind, die sich nach außen verjüngen.

8. Direktsämaschine nach einem oder mehreren der vorstehenden Ansprüche, dadurch gekennzeichnet, daß der Rotor (13,39,42,48) gegenüber dem Rahmen (1) der Drillmaschine nach oben ausweichbar, vorzugsweise federnd aufgehängt ist.

9. Direktsämaschine nach Anspruch 3, dadurch gekennzeichnet, daß das Bearbeitungselement (13,39,42,48) von einer Kraftquelle, um eine quer zur Fahrtrichtung verlaufende Drehachse (15) rotierend antreibbar ist.

10. Direktsämaschine nach einem oder mehreren der vorstehenden Ansprüche, dadurch gekennzeichnet, daß das Bearbeitungselement (13,39,42,48) ein drehbar gelagertes Tragelement (16,43,49) aufweist, daß das Tragelement (16,43) als Tragrohr ausgebildet ist und die Ansätze (18,34,45) auf dem Tragrohrmantel (17) angeordnet sind.

11. Direktsämaschine nach einem oder mehreren der vorstehenden Ansprüche, dadurch gekennzeichnet, daß die Ansätze (18,34,45,52) zahnförmig, sägezahnförmig, stiftförmig oder zinkenförmig ausgebildet sind.

12. Direktsämaschine nach einem oder mehreren der vorstehenden Ansprüche, dadurch gekennzeichnet, daß dem Bearbeitungselement (13) Höhenführungsrollen (33) zugeordnet sind.

13. Direktsämaschine nach einem oder mehreren der vorstehenden Ansprüche, dadurch gekennzeichnet, daß das Bearbeitungselement (13,39,42,48) mit einer Drehzahl von 100 bis 400 U/min, vorzugsweise 160 bis 180 U/min rotiert.

14. Direktsämaschine nach einem oder mehreren der vorstehenden Ansprüche, dadurch gekennzeichnet, daß der Durchmesser des Tragrohres (16) 120 bis 250 mm, vorzugsweise 160 mm beträgt.

15. Direktsämaschine nach einem oder mehreren der vorstehenden Ansprüche, dadurch gekennzeichnet, daß der Flugkreisdurchmesser der äußeren Enden (27) der Ansätze (18) 240 bis 500 mm, vorzugsweise 300 bis 350 mm beträgt.

16. Direktsämaschine nach einem oder mehreren der vorstehenden Ansprüche, dadurch gekennzeichnet, daß das Bearbeitungselement (13,39,42,48) in Höhenrichtung bewegbar und/oder einstellbar gegenüber dem Rahmen (1) am Rahmen (1) angeordnet ist.

17. Direktsämaschine nach einem oder mehreren der vorstehenden Ansprüche, dadurch gekennzeichnet, daß das Bearbeitungselement (13,39,42,48) derart einstellbar ist, daß die äußeren Enden der Ansätze (18,34,45,52) sich oberhalb oder auf Höhe der Bodenoberfläche befinden oder etwas in den Boden (10) bis etwa oberhalb des im Boden abgelegten Saatgutes (39) eindringen.

## Claims

1. Direct sowing method: i.e. zero tillage and/or minimum tillage method, for the depositing of seeds in the ground, where the seeds (119) are deposited in sowing furrows (120), generated by sowing coulters (7,7',76,80), in the ground (10), characterised by the following features:
a) after the depositing of the seeds (119) in the ground (10), the plants and plant remains (29), located on the surface of the ground sometimes in heaps and/or small piles and sometimes mixed with particles of soil, are picked up by a driven processing rotor (13,39,42,48) which is situated above the ground surface and is disposed behind the sowing coulters, said rotor being provided with tine-like elements (18,34,45,52), which are moved by a motor substantially above the ground (10), and are subsequently deposited again in an evenly distributed manner above the ground (10) and above the deposited seeds (119),
b) the picking up of these small piles results, at least partially, in the separation of the plant parts (29) from the particles of soil (32).

2. Direct sowing method according to claim 1, characterised in that the rotor (13, 39,42,48) can be adjusted such that the rotor (13 39 42 48) conveys particles of soil into the sowing furrows so that the sowing furrows are closed and/or the seeds (119) deposited in the sowing furrows are covered with particles of soil (31).

3. Direct sowing drill for the direct sowing method, i.e. zero tillage and/or minimum tillage method, including a frame, hopper and at least three, preferably four crossrows of sowing coulters (7), lying behind one another and disposed offset to one another, and for which sowing coulters depth guide rollers (9) are provided, which support the sowing coulters (7) at their penetration depth in the ground, the distance between coulters being a minimum of 50 cm, characterised in that at least one driven processing rotor (13,39,42,48) with tines (18,34,45,52) which are moved by a motor above the ground (10), is disposed behind the sowing coulters, the direction of rotation of which tines is preferably selected such that the bottom of the rotor rotates in the direction of travel (19) so that, during operation, the plants and plant remains (29), located on the surface of the ground sometimes in heaps and/or small piles and sometimes mixed with particles of soil (31), are picked up and are subsequently deposited again in an evenly distributed manner on the ground (10) and on the deposited seeds (119), and the picking up of these small piles results in the separation, at least partially, of the plant parts (29) from the particles of soil (32).

4. Direct sowing drill according to claim 3, characterised in that the sowing coulters are configured as knife coulters (7) or as cultivator or hoe coulters (76), which have at least one deflecting body (79) under the seed outlet and right below its bottom end for the broadcasting of the seeds (119).

5. Direct sowing drill according to one or several of the preceding claims, characterised in that the sowing coulters (7,7') have holders (77) and coulter bodies, in that the coulter bodies (76,80) are mounted on the holders (77) so as to be detachable and exchangeable, in that coulter bodies that are configured optionally as knife coulters (7), band and knife band coulters (80) or cultivator coulters (76) can be mounted on the holders (77).

6. Direct sowing drill according to one or several of the preceding claims, characterised in that the cultivator coulters (76) have laterally protruding coulter vanes (78), and in that a deflecting body (79) is disposed below the coulter vanes (78) and under the seed outlet.

7. Direct sowing drill according to one or several of the preceding claims, characterised in that the processing rotor (13,39,42,48) has a diameter of at least 20 cm, in that tines or projections (18,34,45,52), which taper outwardly, are disposed on the surface of the rotor (13,39,42,48).

8. Direct sowing drill according to one or several of the preceding claims, characterised in that the rotor (13,39,42,48) is suspended relative to the frame (1) of the seed drill, preferably in a resilient manner, so as to deflect upwards.

9. Direct sowing drill according to claim 3, characterised in that the processing element (13,39,42,48) can be driven in a rotating manner by a power source around an axis of rotation (15) which extends transversely relative to the direction of travel.

10. Direct sowing drill according to one or several of the preceding claims, characterised in that the processing element (13,39,42,48) has a supporting element (16,43,49) which is mounted so as to be rotatable, in that the supporting element (16,43) is configured as a supporting tube and the projections (18,34,45) are disposed on the surface (17) of the supporting tube.

11. Direct sowing drill according to one or several of the preceding claims, characterised in that the projections (18,34,45,52) are configured so as to be tooth-shaped, saw-tooth-shaped, pin-shaped or tine-shaped.

12. Direct sowing drill according to one or several of the preceding claims, characterised in that depth guide rollers (33) are assigned to the processing element (13).

13. Direct sowing drill according to one or several of the preceding claims, characterised in that the processing element (13,39,42,48) rotates at a speed of 100 to 400 r.p.m., preferably at 160 to 180 r.p.m.

14. Direct sowing drill according to one or several of the preceding claims, characterised in that the diameter of the supporting tube (16) is 120 to 250 mm, preferably 160 mm.

15. Direct sowing drill according to one or several of the preceding claims, characterised in that the flight diameter of the outer ends (27) of the projections (18) is 240 to 500 mm, preferably 300 to 350 mm.

16. Direct sowing drill according to one or several of the preceding claims, characterised in that the processing element (13,39,42,48) is disposed on the frame (1) so as to be displaceable vertically and/or adjustable relative to the frame (1).

17. Direct sowing drill according to one or several of the preceding claims, characterised in that the processing element (13,39,42,48) is adjustable such that the outer ends of the projections (18,34,45,52) are located above or at the level of the surface of the ground or penetrate a little into the ground (10) up to substantially above the seeds (39) deposited in the ground.

## Revendications

1. Procédé d'ensemencement direct c'est-à-dire avec du zérotillage et/ou un tillage minimum pour ensemencer le sol, selon lequel la semence (119) est déposée dans le sol (10) dans des sillons d'ensemencement (2O) réalisés par les socs de semoir (7, 7', 76, 80), caractérisé en ce que
a) après avoir déposé la semence (119) dans le sol (10), les résidus de plante ou les plantes (29) mélangés partiellement avec de la terre (31) et qui se trouvent à la surface du sol et en partie sous forme de tas et/ou des petits tas, sont pris par un rotor de travail (13, 39, 42, 48) prévu derrière les socs de semoir, entraîné au-dessus de la surface du sol (10), avec des éléments (18, 34, 45, 52) en forme de dents déplacés par un moteur essentiellement au-dessus du sol (10), pour être de nouveau déposés de manière régulière au-dessus du sol (10) et des semences (119) déposées,
b) par l'enlèvement de ces petits tas, on réalise une séparation au moins partielle des parties de plante (29) et des parties de terre (31).

2. Procédé d'ensemencement direct selon la revendication 1,
caractérisé en ce que
le rotor (13, 39, 42, 48) est réglé de façon que ce rotor (13, 39, 42, 48) fait passer de la terre dans les sillons à semence pour fermer les sillons à semence et/ou recouvrir de terre (31) les graines de semence (119) déposées dans les sillons.

3. Semoir direct pour la mise en oeuvre du procédé d'ensemencement direct c'est-à-dire un procédé de zérotillage et/ou un procédé de tillage minimum, comprenant un châssis, des réservoirs et au moins trois et de préférence quatre rangées transversales placées les unes derrière des autres et en quinconce, de socs de semoir (7) auxquels sont associés des rouleaux de guidage en profondeur (9) qui portent les socs de semoir (7) pour leur profondeur de pénétration dans le sol,
l'intervalle entre les socs étant au moins égal à 50 cm, caractérisé en ce que
derrière les socs de semoir, il y a au moins un rotor de travail (13, 39, 42, 48) entraîné, avec des dents (18, 34, 45, 52) entraînées par un moteur au-dessus du sol (10), et son sens de rotation est choisi de préférence pour que le côté inférieur du rotor tourne dans le sens de circulation (19) pour qu'en fonctionnement, les plantes et résidus de plante (29) mélangés en partie avec de la terre (31) qui se trouve à la surface du sol et partiellement en tas et/ou en petits tas, soient pris par le rotor de travail (13, 39, 42, 48) puis soient de nouveau déposés de manière régulière au-dessus du sol (10) et au-dessus des semences (119) déposées, et par la prise de ces petits tas, on a au moins une séparation partielle des parties de plante (29) par rapport à la terre (31).

4. Semoir direct selon la revendication 3,
caractérisé en ce que
les socs de semoir sont des socs coutres (7) ou des socs de cultivateur ou de hachoir (76) qui passent en dessous de la sortie de semence et comportent directement en dessous de leur extrémité inférieure au moins un organe de rebondissement (79) pour distribuer en largeur les semences (119).

5. Semoir direct selon l'une ou plusieurs des revendications précédentes,
caractérisés en ce que
les socs de semoir (7, 7') comportent des supports (77) et des corps de soc,
les supports (77) portent fixés de manière amovible et interchangeable les corps de soc (76, 80),
et sélectivement on peut fixer des socs coutres (7), des socs à ruban, des socs à ruban coutres (80) ou des socs de cultivateur (76) constituant les corps de soc sur les supports de soc (77).

6. Semoir direct selon une ou plusieurs des revendications précédentes,
caractérisé en ce que
les socs de cultivateurs (76) comportent des ailes (78) en saillie latéralement et en ce que sous les ailes de soc (78) et en dessous de la sortie de semence se trouve un organe de rebondissement (79).

7. Semoir direct selon une ou plusieurs des revendications précédentes,
caractérisé en ce que
le rotor de travail (13, 39, 42, 48) a un diamètre au moins égal à 20 cm,
la surface enveloppe du rotor (13, 39, 42, 48) comporte des dents ou des prolongements (18, 34, 45, 52) qui vont en diminuant vers l'extérieur.

8. Semoir direct selon une ou plusieurs des revendications précédentes,
caractérisé en ce que
le rotor (13, 39, 42, 48) peut s'échapper vers le haut par rapport au châssis (1) du semoir de préférence par une suspension élastique.

9. Semoir direct selon la revendication 3,
caractérisé en ce que
l'élément de travail (13, 39, 42, 48) est entraîné en rotation par une source motrice autour d'un axe de rotation (15) disposé transversalement à la direction de circulation.

10. Semoir direct selon une ou plusieurs des revendications précédentes,
caractérisé en ce que
l'élément de travail (13, 39, 42, 48) comporte un élément de support (16, 43, 49) monté à rotation, cet élément de support (16, 43) étant en forme de tube de support et les prolongements (18, 34, 45) sont montés sur l'enveloppe (17) du tube de support.

11. Semoir direct selon une ou plusieurs des revendications précédentes,
caractérisé en ce que
les prolongements (18, 34, 45, 52) sont en forme de dents, en forme de dents de soie, en forme de tiges ou en forme de dents-tiges.

12. Semoir direct selon une ou plusieurs des revendications précédentes,
caractérisé par
des galets de guidage en hauteur (33) associés à l'élément de travail (13).

13. Semoir direct selon une ou plusieurs des revendications précédentes,
caractérisé en ce que
l'élément de travail (13, 39, 42, 48) est entraîné en rotation à une vitesse de rotation comprise entre 100 et 400 tours/minute et de préférence entre 160 et 180 tours/minute.

14. Semoir direct selon une ou plusieurs des revendications précédentes,
caractérisé en ce que
le diamètre du tube de support (16) est compris entre 120 et 250 mm et correspond de préférence à 160 mm.

15. Semoir direct selon une ou plusieurs des revendications précédentes,
caractérisé en ce que
le diamètre du cercle de la trajectoire des extrémités extérieures (27) des prolongements (18) est compris entre 240 et 500 mm, et est égal de préférence à 300-350 mm.

16. Semoir direct selon une ou plusieurs des revendications précédentes,
caractérisé en ce que
l'élément de travail (13, 39, 42, 48) est mobile dans le sens de la hauteur et/ou réglable par rapport au châssis (1) dans sa fixation du châssis (1).

17. Semoir direct selon une ou plusieurs des revendications précédentes,
caractérisé en ce que
l'élément de travail (13, 39, 42, 48) est réglable pour que les extrémités extérieures des prolongements (18, 34, 45, 52) se trouvent au-dessus de la surface du sol ou à la hauteur de la surface du sol ou pénètrent légèrement dans le sol (10) sensiblement jusqu'au dessus des semences (39) déposées dans le sol.
